(19) Europäisches Patentamt / European Patent Office / Office européen des brevets

(11) **EP 3 905 386 A1**

(12) **EUROPEAN PATENT APPLICATION**
published in accordance with Art. 153(4) EPC

(43) Date of publication:
**03.11.2021 Bulletin 2021/44**

(51) Int Cl.:
*H01M 4/13* (2010.01)    *H01M 10/052* (2010.01)
*H01M 10/0567* (2010.01)    *H01M 10/0568* (2010.01)
*H01M 10/0587* (2010.01)    *H01M 2/16* (2006.01)
*H01M 2/26* (2006.01)

(21) Application number: **19902612.1**

(22) Date of filing: **19.12.2019**

(86) International application number:
**PCT/JP2019/049868**

(87) International publication number:
**WO 2020/137818 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2018 JP 2018246591**

(71) Applicant: SANYO Electric Co., Ltd.
**Daito-shi**
**Osaka 574-8534 (JP)**

(72) Inventors:
• **TAO, Yohei**
  **Chuo-ku, Osaka-shi, Osaka 540-6207 (JP)**
• **INOUE, Masao**
  **Chuo-ku, Osaka-shi, Osaka 540-6207 (JP)**
• **MINAMI, Keisuke**
  **Chuo-ku, Osaka-shi, Osaka 540-6207 (JP)**
• **FUJIHARA, Toyoki**
  **Chuo-ku, Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(54) **NON-AQUEOUS ELECTROLYTE SECONDARY BATTERY AND METHOD FOR MANUFACTURING SAME**

(57)    Provided is a non-aqueous electrolyte secondary battery having excellent low-temperature output characteristics and high-temperature storage characteristics. The non-aqueous electrolyte secondary battery comprises: a positive electrode core; a positive electrode plate having a positive electrode active material layer which is formed on the positive electrode core and contains a positive electrode active material; a negative electrode core; a negative electrode plate having a negative electrode active material layer which is formed on the negative electrode core and contains a negative electrode active material; a separator disposed between the positive electrode plate and the negative electrode plate; and a non-aqueous electrolytic solution, wherein the non-aqueous electrolytic solution contains lithium bis(oxalate) borate, and the value of A/B is 2-11, where A ($\mu$mol) is the total amount of lithium bis(oxalate) borate contained in the non-aqueous electrolytic solution, and B($m^2$) is the total area of the negative electrode active material contained in the region of the negative electrode active material layer facing the positive electrode active material layer with the separator therebetween.

Figure 1

**Description**

TECHNICAL FIELD

The present invention relates to a non-aqueous electrolyte secondary battery and a method for producing the same.

BACKGROUND ART

Non-aqueous electrolyte secondary batteries are used for the drive power source for driving hybrid electric vehicles (PHEV, HEV) and electric vehicles (EV). Non-aqueous electrolyte secondary batteries used for such a drive power source are more required for improvement in performance and reliability.

Non-aqueous electrolyte secondary batteries used for the drive power source are also used in low-temperature environments. Therefore, the non-aqueous electrolyte secondary batteries used for the drive power source are required to have excellent battery characteristics even in low-temperature environments. In addition, the non-aqueous electrolyte secondary batteries used for the drive power source may be stored at high temperatures, and therefore are required to have no deterioration of battery characteristics when stored at high temperatures.

For example, Patent Literature 1 below has proposed non-aqueous organic solvents including propylene carbonate and non-aqueous electrolytes including lithium bisfluorosulfonylimide for improving the low temperature output characteristics.

CITATION LIST

PATENT LITERATURE

PATENT LITERATURE 1: Japanese Unexamined Patent Application Publication No. 2016-164879

SUMMARY

TECHNICAL PROBLEM

One of the objectives of the present invention is to provide a non-aqueous electrolyte secondary battery that is excellent in low temperature output characteristics and high temperature storage characteristics.

SOLUTION TO PROBLEM

The non-aqueous electrolyte secondary battery of one embodiment of the present invention comprises:

a positive electrode plate having a positive electrode core body and a positive electrode active material layer formed on the positive electrode core body, the positive electrode active material layer including a positive electrode active material;
a negative electrode plate having a negative electrode core body and a negative electrode active material layer formed on the negative electrode core body, the negative electrode active material layer including a negative electrode active material;
a separator placed between the positive electrode plate and the negative electrode plate; and
a non-aqueous electrolyte solution,
wherein the non-aqueous electrolyte solution contains lithium bisoxalate borate ($LiC_4BO_8$), and
when the total amount of lithium bisoxalate borate included in the non-aqueous electrolyte solution is denoted by A ($\mu$mol), and
in the negative electrode active material layer, the total area of the negative electrode active material included in the region facing the positive electrode active material layer via the separator is denoted by B ($m^2$),
the value of A/B is 2 to 11.

When the non-aqueous electrolyte solution contains lithium bisoxalate borate, a film derived from lithium bisoxalate borate is formed on the negative electrode active material by the first charge of the non-aqueous electrolyte secondary battery. Formation of this film suppresses the side reaction between the non-aqueous electrolyte solution and the negative electrode active material, and therefore the durability of the non-aqueous electrolyte secondary battery is improved.

However, when lithium bisoxalate borate is contained in the non-aqueous electrolyte solution, the low temperature output characteristics and the high temperature storage characteristics may be deteriorated.

The present inventors of the present application have conducted various investigations and found that the proportion of the total amount A ($\mu$mol) of lithium bisoxalate borate contained in the non-aqueous electrolyte solution based on the total area B (m$^2$) of the negative electrode active material included in the region of the negative electrode active material layer facing the positive electrode active material layer via the separator is set to a specific range, thereby providing the non-aqueous electrolyte secondary battery that is excellent in low temperature output characteristics and high temperature storage characteristics. That is, when the value of A/B is 2 to 11, an appropriate amount of an appropriate film is formed on the surface of the negative electrode active material. Therefore, the film does not hinder the movement of lithium ions and can effectively suppress the side reaction between the non-aqueous electrolyte solution and the negative electrode active material, thereby providing the non-aqueous electrolyte secondary battery that is excellent in low temperature output characteristics and high temperature storage characteristics.

The value of A/B is preferably 7 to 11. This provides the non-aqueous electrolyte secondary battery that is superior in low temperature output characteristics.

When the total surface area of the positive electrode active material included in the positive electrode active material layer is denoted by C (m$^2$),

preferably, the value of A/C is 5 to 35, and
the above non-aqueous electrolyte solution includes lithium fluorosulfonate.

This configuration provides the non-aqueous electrolyte secondary battery in which the initial battery resistance is smaller and the increase in resistance with the charge-and-discharge cycle is effectively suppressed.

When the total amount of lithium fluorosulfonate included in the above non-aqueous electrolyte solution is denoted by D ($\mu$mol), the value of D/C is preferably 20 to 80.

This configuration provides the non-aqueous electrolyte secondary battery in which the initial battery resistance is smaller and the increase in resistance with the charge-and-discharge cycle is effectively suppressed.

Preferably, the electrode assembly is a flat wound electrode assembly,

an exposed portion of a wound positive electrode core body is provided at one end of the flat wound electrode assembly, and
an exposed portion of a wound negative electrode core body is provided at the other end of the flat wound electrode assembly.

This configuration provides the non-aqueous electrolyte secondary battery that is superior in the low temperature output characteristics.

Preferably, the above separator has a polyolefin layer,

the surface of the negative electrode active material layer is in direct contact with the polyolefin layer, and
the thickness of the separator is 14 to 23 $\mu$ m.

This configuration provides the non-aqueous electrolyte secondary battery that is superior in the low temperature output characteristics.

The method for producing the non-aqueous electrolyte secondary battery of one embodiment of the present invention, comprising:

a positive electrode plate having a positive electrode core body and a positive electrode active material layer formed on the positive electrode core body, the positive electrode active material layer including a positive electrode active material;
a negative electrode plate having a negative electrode core body and a negative electrode active material layer formed on the negative electrode core body, the negative electrode active material layer including a negative electrode active material;
a separator placed between the positive electrode plate and the negative electrode plate;
a non-aqueous electrolyte solution; and
a battery case accommodating the positive electrode plate, the negative electrode plate, the separator, and the non-aqueous electrolyte solution,
the method comprising:

a step of producing an electrode assembly including the positive electrode plate, the negative electrode plate, and the separator; and
a step of placing the electrode assembly and the non-aqueous electrolyte solution in the battery case,

wherein the non-aqueous electrolyte solution contains lithium bisoxalate borate, and
when the total amount of lithium bisoxalate borate included in the non-aqueous electrolyte solution placed in the battery case is denoted by A ($\mu$mol), and in the negative electrode active material layer of the negative electrode plate placed in the battery case, the total area of the negative electrode active material included in the region facing the positive electrode active material layer via the separator is denoted by B ($m^2$), the value of A/B is 2 to 11.

The value of A/B is preferably 5 to 8.

When the total surface area of the positive electrode active material included in the positive electrode active material layer of the positive electrode plate placed in the battery case is denoted by C ($m^2$), the value of A/C is 5 to 35, and the non-aqueous electrolyte solution preferably includes lithium fluorosulfonate.

When the total amount of lithium fluorosulfonate included in the above non-aqueous electrolyte solution placed in the battery case is denoted by D ($\mu$mol), the value of D/C is preferably 20 to 80.

ADVANTAGEOUS EFFECTS OF INVENTION

The present invention provides a non-aqueous electrolyte secondary battery that is excellent in low temperature output characteristics and high temperature storage characteristics.

BRIEF DESCRIPTION OF DRAWINGS

FIG. 1 is a schematic front view showing the inside of the battery, without the front portion of the battery case and the front portion of the insulating sheet of the non-aqueous electrolyte secondary battery according to the embodiment.
FIG. 2 is a top view of the non-aqueous electrolyte secondary battery according to the embodiment.
FIG. 3 (a) is a plan view of the positive electrode plate according to the embodiment. FIG. 3 (b) is a sectional view along the IIIB-IIIB line in (a).
FIG. 4 (a) is a plan view of the negative electrode plate according to the embodiment. FIG. 4 (b) is a sectional view along the IVB-IVB line in (a).

DESCRIPTION OF EMBODIMENTS

Hereinafter, the embodiment of the present invention will be described in detail. However, the embodiment shown below is an example of the present invention, and the present invention is not limited to this embodiment.

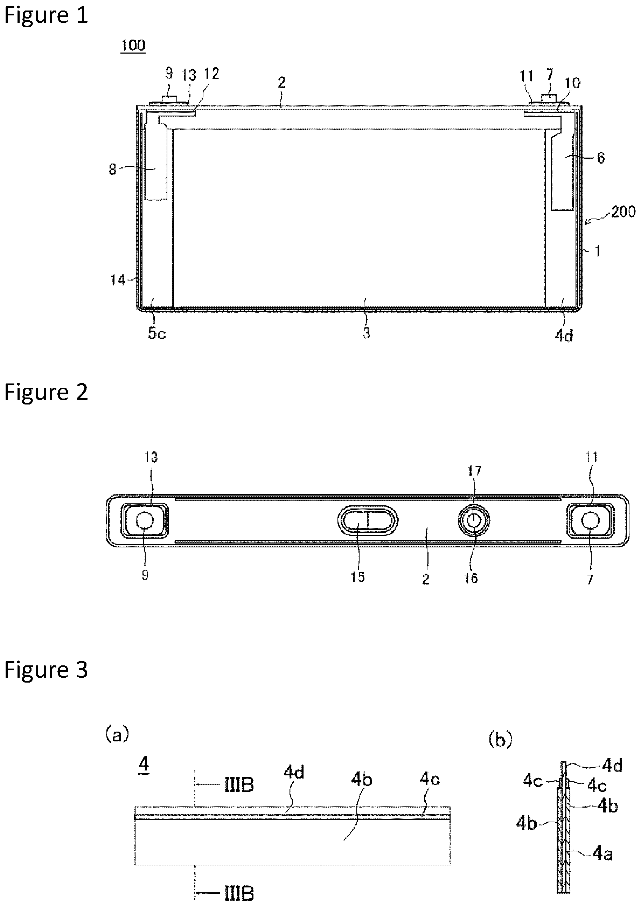

FIG. 1 and FIG. 2 are used to describe the configuration of rectangular non-aqueous electrolyte secondary battery 100 according to the embodiment. As shown in FIG. 1 and FIG. 2, the rectangular non-aqueous electrolyte secondary battery 100 according to the embodiment has a rectangular bottom-shaped cylindrical exterior assembly 1 with an opening and a sealing plate 2 sealing the opening of the exterior assembly 1. A battery case 200 is composed of the exterior assembly 1 and the sealing plate 2. The exterior assembly 1 accommodates a non-aqueous electrolyte solution and the flat wound electrode assembly 3 in which a band-shaped positive electrode plate 4 and a band-shaped negative electrode plate 5 are wound with a band-shaped separator (not shown) therebetween. The wound electrode assembly 3 has an exposed portion of the wound positive electrode core body 4d at one end, and has an exposed portion of the wound negative electrode core body 5c at the other end.

The positive electrode current collector 6 is connected to the exposed portion of the positive electrode core body 4d, and the positive electrode current collector 6 and a positive electrode terminal 7 are connected electrically. An inner insulating member 10 is placed between the positive electrode current collector 6 and the sealing plate 2, and the outer insulating member 11 is placed between the positive electrode terminal 7 and the sealing plate 2.

The negative electrode current collector 8 is connected to the exposed portion of the negative electrode core body 5c, and the negative electrode current collector 8 and the negative electrode terminal 9 are connected electrically. An inner insulating member 12 is placed between the negative electrode current collector 8 and the sealing plate 2, and an outer insulating member 13 is placed between the negative electrode terminal 9 and the sealing plate 2.

A resin insulating sheet 14 is placed between a wound electrode assembly 3 and the exterior assembly 1. In the sealing plate 2, provided is a gas exhaust valve 15 that breaks when the pressure in the battery case 200 is the specified value or more to exhaust gas in the battery case 200 to outside of the battery case 200. In addition, a non-aqueous electrolyte solution injection hole 16 is formed in the sealing plate 2. This non-aqueous electrolyte solution injection hole 16 is sealed by a sealing member 17 after a non-aqueous electrolyte solution is injected into the battery case 200.

Hereinafter, a method for producing a non-aqueous electrolyte secondary battery 100 will be described.

[Production of Positive Electrode Plate]

The lithium transition metal composite oxide represented by $LiNi_{0.35}CO_{0.35}Mn_{0.30}O_2$ as a positive electrode active material, carbon powder as a conductive agent, and polyvinylidene fluoride (PVdF) as a binding agent are mixed with N-methyl-2-pyrrolidone (NMP) as a dispersion medium to produce a positive electrode mixture slurry. Herein, the mass ratio of the positive electrode active material, conductive agent, and binding agent included in the positive electrode mixture slurry is 91 : 7 : 2.

The positive electrode mixture slurry produced in the above method is applied onto both sides of an aluminum foil having a thickness of 15 μm as a positive electrode core body by using a die-coater. Thereafter, the positive electrode mixture slurry is dried to remove NMP as a dispersion medium. A positive electrode active material layer is compressed by using a pair of compression rollers. At this time, compression treatment is performed so that the packing density of the positive electrode active material layer after compression is 2.4 g/cm³. Then, this is cut to a predetermined size to form the exposed portion of the positive electrode core body in which no positive electrode active material layer is formed on both sides along the longitudinal direction of one end in the width direction of the positive electrode plate, and thus the positive electrode plate is provided.

As shown in FIG. 3(a) and (b), a positive electrode active material layer 4b including the positive electrode active material is formed on both sides of a positive electrode core body 4a. At one end in the width direction of the positive electrode plate 4, provided is an exposed portion of a positive electrode core body 4d in which no positive electrode active material layer 4b is formed on both sides of the positive electrode core body 4a. As shown in FIG. 3 (a) and (b), a positive electrode protective layer 4c can be provided in the vicinity of the end in the width direction of the positive electrode active material layer 4b in the positive electrode core body 4a. The positive electrode protective layer 4c preferably includes ceramic particles and a binder.

[Production of Negative Electrode Plate]

Graphite powder as a negative electrode active material, carboxymethylcellulose (CMC) as a thickening material, and styrene-butadiene rubber (SBR) as a binding agent are dispersed in water at a mass ratio of 98.8 : 1.0 : 0.2 to produce a negative electrode mixture slurry.

The negative electrode mixture slurry produced in the above method is applied onto both sides of a copper foil having a thickness of 8 μm as a negative electrode core body by using a die-coater. Then, the negative electrode mixture slurry is dried to remove water as a dispersion medium, and the negative electrode active material layer is compressed to a predetermined thickness by a roll press. Then, this is cut to a predetermined size to form the exposed portion of the negative electrode core body in which no negative electrode active material layer is formed on both sides along the longitudinal direction of one end in the width direction of the negative electrode plate, and thus the negative electrode plate is provided.

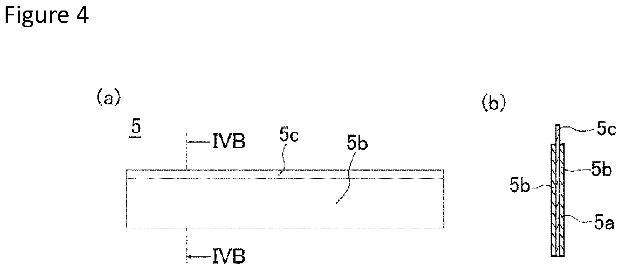

As shown in FIG. 4(a) and (b), a negative electrode active material layer 5b including the negative electrode active material is formed on both sides of a negative electrode core body 5a. At one end in the width direction of the negative electrode plate 5, provided is an exposed portion of a negative electrode core body 5c in which no negative electrode active material layer 5b is formed on both sides of the negative electrode core body 5a.

[Production of Flat Wound Electrode Assembly]

The band-shaped positive electrode plate and band-shaped negative electrode plate produced in the above method are wound through a band-shaped separator with a three-layer of polypropylene / polyethylene / polypropylene and a thickness of 16 μm, and are subjected to press molding to a flat shape to produce a flat wound electrode assembly 3. Then, the exposed portion of the wound positive electrode core body 4d is formed at one end in the winding axis direction of the flat wound electrode assembly 3, and the exposed portion of the negative electrode core body 5c is formed at the other end.

[Adjustment of Non-aqueous Electrolyte Solution]

Ethylene carbonate (EC), ethyl methyl carbonate (EMC), and dimethyl carbonate (DMC) are mixed in a volume ratio (25°C, 1 atm) at 30 : 30 : 40 to produce a mixed solvent. $LiPF_6$ as a solute was added into this mixed solvent so as to be 1.15 mol/L, and 0 to 1.6% by mass of lithium bisoxalate borate based on the non-aqueous electrolyte solution was further added to provide the non-aqueous electrolyte solution.

[Mounting Terminal and Current Collector to Sealing Plate]

The outer insulating member 11 is placed on the battery outer side of a positive electrode terminal mounting hole of the sealing plate 2. The inner insulating member 10 and the positive electrode current collector 6 are placed on the battery inner side of a positive electrode terminal mounting hole of the sealing plate 2. Thereafter, from the battery outer side, the positive electrode terminal 7 is inserted into the through hole of the outer insulating member 11, the positive electrode terminal mounting hole of the sealing plate 2, the through hole of the inner insulating member 10, and the through hole of the positive electrode current collector 6. The tip side of the positive electrode terminal 7 is crimped onto the positive electrode current collector 6. Thereafter, the crimped portion of the positive electrode terminal 7 and the positive electrode current collector 6 are welded and connected.

The outer insulating member 13 is placed on the battery outer side of a negative electrode terminal mounting hole of the sealing plate 2. The inner insulating member 12 and the negative electrode current collector 8 are placed on the battery inner side of a negative electrode terminal mounting hole of the sealing plate 2. Thereafter, from the battery outer side, the negative electrode terminal 9 is inserted into the through hole of the outer insulating member 13, the negative electrode terminal mounting hole of the sealing plate 2, the through hole of the inner insulating member 12, and the through hole of the negative electrode current collector 8. The tip side of the negative electrode terminal 9 is crimped onto the negative electrode current collector 8. Thereafter, the crimped portion of the negative electrode terminal 9 and the negative electrode current collector 8 are welded and connected.

[Connection between Current Collector and Wound Electrode Assembly]

The positive electrode current collector 6 is welded and connected to the exposed portion of the positive electrode core body 4d in which the wound electrode assembly 3 is wound. In addition, the negative electrode current collector 8 is welded and connected to the exposed portion of the negative electrode core body 5c in which the wound electrode assembly 3 is wound. Welded connection can be performed by using, for example, resistance welding, ultrasonic welding, and laser welding.

[Insertion of Wound Electrode Assembly into Exterior Assembly]

The wound electrode assembly 3 is wrapped with the resin insulating sheet 14, and the wound electrode assembly 3 is inserted into the exterior assembly 1. Thereafter, the exterior assembly 1 and the sealing plate 2 are welded together, and the opening of the exterior assembly 1 is sealed with the sealing plate 2.

[Injection and Sealing of Non-Aqueous Electrolyte Solution]

The non-aqueous electrolyte solution produced in the above method is injected from the non-aqueous electrolyte solution injection hole 16 provided in the sealing plate 2, and the non-aqueous electrolyte solution injection hole 16 is sealed with a blind rivet as the sealing member 17. As described above, a non-aqueous electrolyte secondary battery 100 is produced.

[Example 1]

A non-aqueous electrolyte secondary battery having the following configuration was produced in the same manner as in the non-aqueous electrolyte secondary battery 100 described above to provide the non-aqueous electrolyte secondary battery in Example 1.

The total amount A ($\mu$mol) of lithium bisoxalate borate included in the non-aqueous electrolyte solution to be injected into the battery case 200 was 910 $\mu$mol. In addition, in the negative electrode active material layer 5b of the negative electrode plate 5 placed in the battery case 200, the total surface area B ($m^2$) of the negative electrode active material included in the region facing the positive electrode active material layer 4b via the separator was 157 $m^2$.

The total amount A ($\mu$mol) of lithium bisoxalate borate included in the non-aqueous electrolyte solution to be injected into the battery case 200 can be adjusted by the content ratio of lithium bisoxalate borate in the non-aqueous electrolyte solution and the amount of the non-aqueous electrolyte solution to be injected into the battery case 200.

In the negative electrode active material layer 5b of the negative electrode plate 5 placed in the battery case 200, the total surface area B ($m^2$) of the negative electrode active material included in the region facing the positive electrode active material layer 4b via the separator can be calculated from the BET specific surface area of the negative electrode active material and the mass of the negative electrode active material included in the region facing the positive electrode active material layer 4b via the separator in the negative electrode active material layer 5b.

[Example 2]

A non-aqueous electrolyte secondary battery having the following configuration was produced in the same manner as in the non-aqueous electrolyte secondary battery 100 described above to provide the non-aqueous electrolyte secondary battery in Example 2.
The total amount A ($\mu$mol) of lithium bisoxalate borate included in the non-aqueous electrolyte solution to be injected into the battery case 200 was 910 $\mu$mol. In addition, in the negative electrode active material layer 5b of the negative electrode plate 5 placed in the battery case 200, the total surface area B ($m^2$) of the negative electrode active material included in the region facing the positive electrode active material layer 4b via the separator was 227 $m^2$.

[Example 3]

A non-aqueous electrolyte secondary battery having the following configuration was produced in the same manner as in the non-aqueous electrolyte secondary battery 100 described above to provide the non-aqueous electrolyte secondary battery in Example 3.
The total amount A ($\mu$mol) of lithium bisoxalate borate included in the non-aqueous electrolyte solution to be injected into the battery case 200 was 910 $\mu$mol. In addition, in the negative electrode active material layer 5b of the negative electrode plate 5 placed in the battery case 200, the total surface area B ($m^2$) of the negative electrode active material included in the region facing the positive electrode active material layer 4b via the separator was 210 $m^2$.

[Example 4]

A non-aqueous electrolyte secondary battery having the following configuration was produced in the same manner as in the non-aqueous electrolyte secondary battery 100 described above to provide the non-aqueous electrolyte secondary battery in Example 4.
The total amount A ($\mu$mol) of lithium bisoxalate borate included in the non-aqueous electrolyte solution to be injected into the battery case 200 was 830 $\mu$mol. In addition, in the negative electrode active material layer 5b of the negative electrode plate 5 placed in the battery case 200, the total surface area B ($m^2$) of the negative electrode active material included in the region facing the positive electrode active material layer 4b via the separator was 123 $m^2$.

[Example 5]

A non-aqueous electrolyte secondary battery having the following configuration was produced in the same manner as in the non-aqueous electrolyte secondary battery 100 described above to provide the non-aqueous electrolyte secondary battery in Example 5.
The total amount A ($\mu$mol) of lithium bisoxalate borate included in the non-aqueous electrolyte solution to be injected into the battery case 200 was 830 $\mu$mol. In addition, in the negative electrode active material layer 5b of the negative electrode plate 5 placed in the battery case 200, the total surface area B ($m^2$) of the negative electrode active material included in the region facing the positive electrode active material layer 4b via the separator was 98 $m^2$.

[Comparative Example 1]

A non-aqueous electrolyte secondary battery having the following configuration was produced in the same manner as in the non-aqueous electrolyte secondary battery 100 described above to provide the non-aqueous electrolyte secondary battery in Comparative Example 1.
A non-aqueous electrolyte solution including no lithium bisoxalate borate was used as the non-aqueous electrolyte solution. Therefore, the total amount A ($\mu$mol) of lithium bisoxalate borate included in the non-aqueous electrolyte solution to be injected into the battery case 200 was 0 $\mu$mol. In addition, in the negative electrode active material layer 5b of the negative electrode plate 5 placed in the battery case 200, the total surface area B ($m^2$) of the negative electrode active material included in the region facing the positive electrode active material layer 4b via the separator was 157 $m^2$.

[Comparative Example 2]

A non-aqueous electrolyte secondary battery having the following configuration was produced in the same manner as in the non-aqueous electrolyte secondary battery 100 described above to provide the non-aqueous electrolyte secondary battery in Comparative Example 2. The total amount A ($\mu$mol) of lithium bisoxalate borate included in the non-aqueous electrolyte solution to be injected into the battery case 200 was 3650 $\mu$mol. In addition, in the negative electrode active material layer 5b of the negative electrode plate 5 placed in the battery case 200, the total surface area B ($m^2$) of the negative electrode active material included in the region facing the positive electrode active material layer 4b via the separator was 177 $m^2$.

The following tests were performed on the non-aqueous electrolyte secondary batteries of Examples 1 to 5 and Comparative Examples 1 and 2.

<Measurement of Low Temperature Output Characteristics>

A non-aqueous electrolyte secondary battery was charged to a charging depth (SOC) of 27% with a current of 4 A at 25°C, and was left for 4 hours at -35°C. Thereafter, discharge was performed for 2 seconds with currents of 12 A, 24 A, 36 A, 48 A, 60 A, and 72 A, and the respective battery voltages were measured. The output (W) was calculated from the I-V characteristics in discharging by plotting each of the current values and the battery voltages, and the low temperature output characteristics were thus obtained. The charging depth deviated by the discharge was returned to the original charging depth by charging with a constant current of 0.4 A.

<High Temperature Storage Test and Calculation of Resistance Increase Rate>

A non-aqueous electrolyte secondary battery was charged to a charging depth (SOC) of 56% with a current of 4 A at 25°C. Then, the battery was discharged with a current of 200 A for 10 seconds, and this battery voltage was measured. The resistance before the high temperature storage test was calculated by dividing the difference of the battery voltage between before and after discharging for 10 seconds with a current of 200 A by the discharge current (200 A).

$$\text{Resistance before high temperature storage test} = (\text{battery voltage before}$$

$$\text{discharging with current of 200 A - battery voltage after discharging for 10 seconds with}$$

$$\text{current of 200 A) / discharge current}$$

Then, the battery was charged to a charging depth of 80% with a current of 4 A at 25°C, and was left for 90 days at 75°C. Thereafter, the constant current discharge was performed to 3 V with a current of 2 A at 25°C, the constant voltage discharge was performed at 3 V for 1 hour, and then charging was performed to a charging depth of 56% with a current of 4 A. Thereafter, the battery was discharged at a current of 200 A for 10 seconds, and the resistance after storage for 90 days (after high temperature storage) was calculated.

The resistance increase rate (%) was calculated from the proportion of the resistance after storage for 90 days (after high temperature storage) based on the resistance before the high temperature storage test.

$$\text{Resistance increase rate due to high temperature storage } (\%) = (\text{resistance after}$$

$$\text{storage for 90 days / resistance before high temperature storage test - 1}) \times 100$$

Table 1 shows the results of measurement of the low temperature output characteristics (low temperature output (W)) and the resistance increase rate (%) due to high temperature storage.

[Table 1]

| | A ($\mu$mol) | B ($m^2$) | A/B ($\mu$mol/$m^2$) | Low temperature output (W) | Resistance increase rate due to high temperature storage (%) |
|---|---|---|---|---|---|
| Example 1 | 910 | 157 | 5.80 | 128 | 39.9 |
| Example 2 | 910 | 227 | 4.01 | 148 | 45.8 |
| Example 3 | 910 | 210 | 4.33 | 149 | 45.3 |
| Example 4 | 830 | 123 | 6.75 | 122 | 38.6 |

(continued)

|  | A ($\mu$mol) | B ($m^2$) | A/B ($\mu$mol/$m^2$) | Low temperature output (W) | Resistance increase rate due to high temperature storage (%) |
|---|---|---|---|---|---|
| Example 5 | 830 | 98 | 8.47 | 110 | 34.7 |
| Comparative Example 1 | 0 | 157 | 0 | 158 | 49.3 |
| Comparative Example 2 | 3650 | 177 | 20.62 | 101 | 26.7 |

When the total amount of lithium bisoxalate borate included in the non-aqueous electrolyte solution placed in the battery case is denoted by A ($\mu$mol), and in the negative electrode active material layer of the negative electrode plate placed in the battery case, the total area of the negative electrode active material included in the region facing the positive electrode active material layer via the separator is denoted by B ($m^2$), it is found that not only the low temperature output characteristics are excellent but also the increase in resistance value due to high temperature storage is suppressed in the non-aqueous electrolyte secondary batteries of Examples 1 to 5 having the value of A/B of 2 to 11.

This can be considered as follows. The value of A/B is set to 2 to 11, and thereby an appropriate amount of an appropriate film is formed on the surface of a negative electrode active material. Therefore, the film does not hinder the movement of lithium ions and can effectively suppress the side reaction between the non-aqueous electrolyte solution and the negative electrode active material, thereby providing the non-aqueous electrolyte secondary battery that is excellent in low temperature output characteristics and high temperature storage characteristics.

When the value of A/B is less than 2 as in Comparative Example 1, the film covering the surface of a negative electrode active material is insufficient, and therefore the side reaction between the negative electrode active material and the non-aqueous electrolyte solution is insufficiently suppressed to largely increase the resistance value due to high temperature storage.

When the value of A/B is more than 11 as in Comparative Example 2, the amount of the film covering the surface of a negative electrode active material becomes excessive, which hinders the movement of lithium ions during the charge-and-discharge reaction to deteriorate the low temperature output characteristics.

The value of A/B is preferably 5 to 8. This provides the non-aqueous electrolyte secondary battery in which not only low temperature output characteristics are superior but also the increase in the resistance value due to high temperature storage is suppressed more effectively.

When the total surface area of the positive electrode active material included in the positive electrode active material layer of the positive electrode plate placed in the battery case is denoted by C ($m^2$), preferably, the value of A/C is 5 to 35 and the non-aqueous electrolyte solution further includes lithium fluorosulfonate. This configuration provides the non-aqueous electrolyte secondary battery in which the initial battery resistance is smaller and the increase in resistance with the charge-and-discharge cycle is effectively suppressed. The amount of lithium fluorosulfonate in the non-aqueous electrolyte solution is preferably 0.01 to 2.0% by mass based on the non-aqueous electrolyte solution.

When the total amount of lithium fluorosulfonate included in the non-aqueous electrolyte solution is denoted by D ($\mu$mol), the value of D/C is preferably 20 to 80. This configuration provides the non-aqueous electrolyte secondary battery in which the initial battery resistance is smaller and the increase in resistance with the charge-and-discharge cycle is suppressed effectively.

The BET specific surface area of the negative electrode active material is preferably 1 to 10 $m^2$/g, more preferably 2 to 9 $m^2$/g, and still more preferably 3 to 8 $m^2$/g. In addition, the negative electrode active material is particularly preferably a carbon material.

The amount of lithium bisoxalate borate in the non-aqueous electrolyte solution is preferably 0.01 to 3.0% by mass, more preferably 0.05 to 3.0% by mass, and still more preferably 0.1 to 2.0% by mass, based on the non-aqueous electrolyte solution.

<Other Components>

The lithium transition metal composite oxide is preferable as a positive electrode active material. Examples of the lithium transition metal composite oxide include lithium cobalt oxide ($LiCoO_2$), lithium manganate ($LiMn_2O_4$), lithium nickel oxide ($LiNiO_2$), lithium nickel manganese composite oxide ($LiNi_{1-x}Mn_xO_2$ (0<x<1)), lithium nickel cobalt composite oxide ($LiNi_{1-x}Co_xO_2$ (0<x<1)), and lithium nickel cobalt manganese composite oxide ($LiNi_xCo_yMn_zO_2$ (0<x<1, 0<y<1, 0<z<1, x + y + z = 1)).

In addition, those obtained by adding, for example, Al, Ti, Zr, Nb, B, W, Mg, or Mo to the above lithium transition metal composite oxide can be used. Examples thereof include the lithium transition metal composite oxide represented by at least $Li_{1+a}Ni_xCo_yMn_zM_bO_2$ (M is at least one element selected from Al, Ti, Zr, Nb, B, Mg and Mo, $0 \leq a \leq 0.2$, $0.2 \leq x \leq 0.5$, $0.2 \leq y \leq 0.5$, $0.2 \leq z \leq 0.4$, $0 \leq b \leq 0.02$, and a + b + x + y + z = 1).

The carbon material capable of absorbing and desorbing lithium ions can be used as a negative electrode active material. Examples of the carbon material capable of absorbing and desorbing lithium ions include graphite, hardly graphitizable carbon, easily graphitizable carbon, fibrous carbon, coke, and carbon black. Of these, graphite is particularly preferable. Moreover, examples of the non-carbon material include silicon, tin, and alloys or oxides mainly including them.

For example, carbonates, lactones, ethers, ketones, and esters can be used as a non-aqueous solvent (organic solvent) of the non-aqueous electrolyte solution, and two or more of these solvents can be used in admixture. For example, cyclic carbonates such as ethylene carbonate, propylene carbonate, and butylene carbonate; and chain carbonates such as dimethyl carbonate, ethyl methyl carbonate, and diethyl carbonate can be used. Particularly, a mixed solvent of cyclic carbonate and chain carbonate is preferably used. In addition, unsaturated cyclic carbonates such as vinylene carbonate (VC) can be added to a non-aqueous electrolyte solution. The non-aqueous electrolyte solution more preferably includes propylene carbonate and methyl propionate.

Those generally used as the electrolyte salt in the conventional lithium ion secondary battery can be used as the electrolyte salt of a non-aqueous electrolyte solution. For example, LiPF6, LiBF4, $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $LiAsF_6$, $LiClO_4$, $Li_2B_{10}Cl_{10}$, $Li_2B_{12}Cl_{12}$, $LiB(C_2O_4)_2$, $LiB(C_2O_4)F_2$, $LiP(C_2O_4)_3$, $LiP(C_2O_4)_2F_2$, $LiP(C_2O_4)F_4$, and a mixture thereof are used. Of these, LiPF6 is particularly preferable. The amount of the electrolyte salt dissolved in the above non-aqueous solvent is preferably 0.5 to 2.0 mol/L.

The non-aqueous electrolyte solution preferably includes lithium fluorosulfonate ($LiFSO_3$). In addition, the non-aqueous electrolyte solution more preferably includes lithium bisoxalate borate ($LiC_4BO_8$), lithium difluorophosphate ($LiPF_2O_2$), and lithium fluorosulfonate ($LiFSO_3$).

A porous separator made of polyolefins such as polypropylene (PP) or polyethylene (PP) is preferably used as a separator. Particularly, the separator having a three-layer structure with polypropylene (PP) and polyethylene (PE) (PP / PE / PP or PE / PP / PE) is preferably used. In addition, the separator can be provided with a heat resistant layer consisting of inorganic particles such as alumina and a binder. In addition, a polymer electrolyte may be used as a separator.

Preferably, the surface of the negative electrode active material layer is in direct contact with the polyolefin layer of the separator and the thickness of the separator is 17 to 23 $\mu$m. This configuration provides the non-aqueous electrolyte secondary battery that is superior in output characteristics. The thickness of the separator is more preferably 14 to 19 $\mu$m.

REFERENCE SIGNS LIST

| | |
|---|---|
| 100 | Non-aqueous electrolyte secondary battery |
| 200 | Battery case |
| 1 | Exterior assembly |
| 2 | Sealing plate |
| 3 | Wound electrode assembly |
| 4 | Positive electrode plate |
| 4a | Positive electrode core body |
| 4b | Positive electrode active material layer |
| 4c | Positive electrode protective layer |
| 4d | Exposed portion of positive electrode core body |
| 5 | Negative electrode plate |
| 5a | Negative electrode core body |
| 5b | Negative electrode active material layer |
| 5c | Exposed portion of negative electrode core body |
| 6 | Positive electrode current collector |
| 7 | Positive electrode terminal |
| 8 | Negative electrode current collector |
| 9 | Negative electrode terminal |
| 10 | Inner insulating member |
| 11 | Outer insulating member |
| 12 | Inner insulating member |

13    Outer insulating member
14    Insulating sheet
15    Gas exhaust valve
16    Non-aqueous electrolyte solution injection hole
17    Sealing member

**Claims**

1.  A non-aqueous electrolyte secondary battery, comprising:

    a positive electrode plate having a positive electrode core body and a positive electrode active material layer formed on the positive electrode core body, the positive electrode active material layer including a positive electrode active material;
    a negative electrode plate having a negative electrode core body and a negative electrode active material layer formed on the negative electrode core body, the negative electrode active material layer including a negative electrode active material;
    a separator placed between the positive electrode plate and the negative electrode plate; and
    a non-aqueous electrolyte solution,
    wherein the non-aqueous electrolyte solution contains lithium bisoxalate borate, and
    when a total amount of lithium bisoxalate borate included in the non-aqueous electrolyte solution is denoted by A ($\mu$mol), and
    in the negative electrode active material layer, a total area of the negative electrode active material included in a region facing the positive electrode active material layer via the separator is denoted by B ($m^2$),
    a value of A/B is 2 to 11.

2.  The non-aqueous electrolyte secondary battery according to claim 1, wherein the value of A/B is 5 to 8.

3.  The non-aqueous electrolyte secondary battery according to claim 1 or 2,

    wherein, when a total surface area of the positive electrode active material included in the positive electrode active material layer is denoted by C ($m^2$),
    a value of A/C is 5 to 35, and
    the non-aqueous electrolyte solution includes lithium fluorosulfonate.

4.  The non-aqueous electrolyte secondary battery according to claim 3,

    wherein, when a total amount of lithium fluorosulfonate included in the non-aqueous electrolyte solution is denoted by D ($\mu$mol),
    a value of D/C is 20 to 80.

5.  The non-aqueous electrolyte secondary battery according to any one of claims 1 to 4,

    wherein the electrode assembly is a flat wound electrode assembly,
    an exposed portion of a wound positive electrode core body is provided at one end of the flat wound electrode assembly, and
    an exposed portion of a wound negative electrode core body is provided at the other end of the flat wound electrode assembly.

6.  The non-aqueous electrolyte secondary battery according to any one of claims 1 to 5,

    wherein the separator has a polyolefin layer,
    a surface of the negative electrode active material layer is in direct contact with the polyolefin layer, and
    the separator has a thickness of 14 to 23 $\mu$m.

7.  A method for producing a non-aqueous electrolyte secondary battery, comprising:

    a positive electrode plate having a positive electrode core body and a positive electrode active material layer formed on the positive electrode core body, the positive electrode active material layer including a positive electrode active material;

a negative electrode plate having a negative electrode core body and a negative electrode active material layer formed on the negative electrode core body, the negative electrode active material layer including a negative electrode active material;

a separator placed between the positive electrode plate and the negative electrode plate;

a non-aqueous electrolyte solution; and

a battery case accommodating the positive electrode plate, the negative electrode plate, the separator, and the non-aqueous electrolyte solution,

the method comprising:

a step of producing an electrode assembly including the positive electrode plate, the negative electrode plate, and the separator; and

a step of placing the electrode assembly and the non-aqueous electrolyte solution in the battery case,

wherein the non-aqueous electrolyte solution contains lithium bisoxalate borate, and

when a total amount of lithium bisoxalate borate included in the non-aqueous electrolyte solution placed in the battery case is denoted by A ($\mu$mol), and in the negative electrode active material layer of the negative electrode plate placed in the battery case, a total area of the negative electrode active material included in a region facing the positive electrode active material layer via the separator is denoted by B (m$^2$), a value of A/B is 2 to 11.

8. The method for producing a non-aqueous electrolyte secondary battery according to claim 7, wherein the value of A/B is 5 to 8.

9. The method for producing a non-aqueous electrolyte secondary battery according to claim 7 or 8,

wherein, when a total surface area of the positive electrode active material included in the positive electrode active material layer of the positive electrode plate placed in the battery case is denoted by C (m$^2$),

a value of A/C is 5 to 35, and

the non-aqueous electrolyte solution includes lithium fluorosulfonate.

10. The method for producing a non-aqueous electrolyte secondary battery according to claim 9,

wherein, when a total amount of lithium fluorosulfonate included in the non-aqueous electrolyte solution placed in the battery case is denoted by D ($\mu$mol),

a value of D/C is 20 to 80.

# Figure 1

# Figure 2

# Figure 3

Figure 4

(a)

(b)

## INTERNATIONAL SEARCH REPORT

| | International application No. |
|---|---|
| | PCT/JP2019/049868 |

**A. CLASSIFICATION OF SUBJECT MATTER**

H01M 4/13(2010.01)i; H01M 10/052(2010.01)i; H01M 10/0567(2010.01)i; H01M 10/0568(2010.01)i; H01M 10/0587(2010.01)i; H01M 2/16(2006.01)i; H01M 2/26(2006.01)i

FI: H01M10/052; H01M10/0568; H01M4/13; H01M10/0587; H01M2/16 P; H01M10/0567; H01M2/26 A

According to International Patent Classification (IPC) or to both national classification and IPC

**B. FIELDS SEARCHED**

Minimum documentation searched (classification system followed by classification symbols)
H01M4/13; H01M10/05-10/0587; H01M10/0587; H01M2/16; H01M2/26

| Documentation searched other than minimum documentation to the extent that such documents are included in the fields searched | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2014-011065 A (TOYOTA MOTOR CORP.) 20.01.2014 (2014-01-20) paragraphs [0107]-[0111], [0116], [0120]-[0123], table 2 | 1-2, 5-8<br>3-4, 9-10 |
| Y | JP 2016-143454 A (SANYO ELECTRIC CO., LTD.) 08.08.2016 (2016-08-08) paragraphs [0044], [0046] | 3-4, 9-10 |
| P, X | JP 2019-106250 A (TOYOTA MOTOR CORP.) 27.06.2019 (2019-06-27) paragraphs [0023]-[0026], [0043]-[0046], [0049], [0056], table 2 | 1-3, 5, 7-9 |
| A | JP 2017-091850 A (TOYOTA MOTOR CORP.) 25.05.2017 (2017-05-25) paragraphs [0023]-[0024] | 1-10 |
| A | JP 2015-153659 A (TOYOTA MOTOR CORP.) 24.08.2015 (2015-08-24) paragraphs [0054]-[0055], table 1 | 1-10 |
| A | JP 2016-100051 A (TOYOTA MOTOR CORP.) 30.05.2016 (2016-05-30) paragraphs [0027], [0039]-[0045], table 1 | 1-10 |

☒ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 06 March 2020 (06.03.2020) | 17 March 2020 (17.03.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

## INTERNATIONAL SEARCH REPORT

International application No.

PCT/JP2019/049868

C (Continuation). DOCUMENTS CONSIDERED TO BE RELEVANT

| Category* | Citation of document, with indication, where appropriate, of the relevant passages | Relevant to claim No. |
|---|---|---|
| A | WO 2013/128805 A1 (TOYOTA INDUSTRIES CORPORATION) 06.09.2013 (2013-09-06) paragraphs [0014]-[0026] | 1-10 |
| A | JP 2014-007168 A (SEKISUI CHEMICAL CO., LTD.) 16.01.2014 (2014-01-16) paragraphs [0034]-[0036] | 1-10 |

Form PCT/ISA/210 (continuation of second sheet) (January 2015)

**INTERNATIONAL SEARCH REPORT**
Information on patent family members

International application No.

PCT/JP2019/049868

| Patent Documents referred in the Report | Publication Date | Patent Family | Publication Date |
|---|---|---|---|
| JP 2014-011065 A | 20 Jan. 2014 | US 2015/0207147 A1 paragraphs [0133]-[0137], [0154], [0157]-[0161], table 2 EP 2359390 A1 CN 104423942 A KR 10-2015-0031314 A | |
| JP 2016-143454 A | 08 Aug. 2016 | US 2016/0226106 A1 paragraphs [0051], [0062] CN 105345979A | |
| JP 2019-106250 A | 27 Jun. 2019 | US 2019/0181429 A1 paragraphs [0048]-[0051], [0053]-[0057], [0101]-[0108], [0124], table 2 CN 109904516 A | |
| JP 2017-091850 A | 25 May 2017 | (Family: none) | |
| JP 2015-153659 A | 24 Aug. 2015 | US 2017/0054179 A1 paragraphs [0058]-[0059], table 1 CN 105993037 A | |
| JP 2016-100051 A | 30 May 2016 | (Family: none) | |
| WO 2013/128805 A1 | 06 Sep. 2013 | (Family: none) | |
| JP 2014-007168 A | 16 Jan. 2014 | US 2013/0273436 A1 paragraphs [0056]-[0061] CN 103283075 A KR 10-2014-0025320 A | |

Form PCT/ISA/210 (patent family annex) (January 2015)

**REFERENCES CITED IN THE DESCRIPTION**

**Patent documents cited in the description**

• JP 2016164879 A